Europäisches Patentamt

European Patent Office

Office européen des brevets

(11) Publication number: **0 261 279**
**A1**

## (12) EUROPEAN PATENT APPLICATION

(21) Application number: 86201637.5

(22) Date of filing: 22.09.86

(51) Int. Cl.4: **B62D 55/02** , **B62D 55/07** ,
**B62D 55/088**

(43) Date of publication of application:
30.03.88 Bulletin 88/13

(84) Designated Contracting States:
AT BE CH DE FR GB IT LI LU NL SE

(71) Applicant: **REDEXIM B.V.**
**Utrechtseweg 127**
**NL-3702 AC Zeist(NL)**

(72) Inventor: **Reincke, Marinus**
**Gooyerdijk**
**NL-3941 MA Doorn(NL)**

(74) Representative: **den Boer, Jan Johannes, ir. et al**
**Octrooibureau Polak & Charlouis Laan**
**Copes van Cattenburch 80**
**NL-2585 GD The Hague(NL)**

(54) Apparatus for increasing the supporting surface of a vehicle carried by wheels.

(57) The supporting surface of a vehicle (1) carried by wheels (28) is increased by a frame (5) which is pivotally mounted below the vehicle, said frame carrying an endless belt (19) extending over rollers (17, 18, 22). The belt is resiliently pushed against the ground, such that it transmits part of the vehicdle weight to the ground. Local peak forces are avoided therewith, which suppresses the grooves in the ground, which otherwise are formed, particularly in soft soil. When transported along the road the frame may be lifted free from the ground.

FIG. 1

## Apparatus for increasing the supporting surface of a vehicle carried by wheels.

The invention relates to an apparatus for increasing the supporting surface on the ground of a vehicle carried by wheels.

When operating agricultural or similar vehicles on a wet or soft soil grooves are made in the soil due to high vehicle weight in combination with a small supporting surface of the tires of e.g. only two wheels. In said grooves the porous structure of the soil is compressed, as a result of which the water management is deteriorated. Also damages to the vegetation may occur, particularly in the fruit culture wherein the vehicle repeatedly drives in the same path between the trees. Furthermore with culture technical operations it is often necessary to ride on a soft sub soil.

For removing said disadvantages it would be necessary to increase the supporting surface of the vehicle on the soil. Such increase of surface could be realised by providing the vehicle with more wheels or using wheels of larger width. The disadvantage thereof is that thereby the roll resistance increases proportionally. Further the pressure on the soil is not equally distributed over the supporting surface (the surface of the flattened wheel tire) but has peaks. In order to avoid particularly said peaks it would be necessary to have a supporting structure which is flat already in itself and is not flattened by the load.

Such a supporting structure is found with caterpillar vehicles. The disadvantage of caterpillar vehicles is that they are not suitable for propulsion along paved roads. With agricultural and similar operations often trailer vehicles and implements respectively are used. The provision of caterpillars requires more than two wheels and a drive of the caterpillar belts, since the roll resistance is considerably larger than that of wheels. An other point is that the caterpillar vehicles are not suitable for high speeds.

The invention proposes to decrease the soil pressure by means of an apparatus to be mounted to existing vehicles, said apparatus being characterized by a frame that is articulated to the vehicle and carries two fixed end rolls extending transversely to the longitudinal direction of the vehicle, an endless belt being provided extending over said rolls, said belt, moreover, being guided in its lower run by intermediate pushing rollers, mounted to the frame which is pushed by resilient pushing means, connected with the vehicle, such that the lower run of the belt is supported by the ground.

The belt may be manufactured from synthetic material, if necessary reinforced with embedded fibres. Thereby the belt is of low weight, causes little noise and may flexibly adapt itself to uneven grounds. The vehicle weight is now distributed between the lower belt run and the wheels and thereby over a considerably increased supporting surface.

Preferably the resilient pushing means include a piston cylinder device which is at one end articulated to a pivot arm connecting the belt frame with the vehicle, said piston cylinder device transmitting part of the vehicle weight to the frame and thereby to the lower belt part and being adapted to lift the belt frame free of the ground when it is not used.

By the last mentioned feature the vehicle is permitted to be displaced along the road with larger speed without demounting the apparatus.

Some resiliency in the belt support may be achieved in a simple manner if the piston cylinder device is a hydraulic piston cylinder device, a hydraulic accumulator being included in the hydraulic circuit thereof.

In order to prevent that inegalities in the ground, e.g. stones, damage the belt, it is advantageous if the pivot arm and the piston cylinder device engage a central shaft of the belt frame, a rocker arm being also pivotably connected to said shaft, said rocker arm carrying the intermediate push rollers, said rocker arm supporting at its both ends one one more intermediate push rollers which are pivotable relative to the rocker arm.

Due to the pivotable suspension when the front intermediate roller passes by an inegality the reaction force of the ground is equally distributed over all other intermediate rollers, so that the dimensions of each roller at the journals thereof may be designed for a much lesser force than the force of the total vehicle weight.

In order to avoid that the vehicle drive motor or the drive motor of the tractor vehicle in case it is a trailer vehicle has to compensate for the roll resistance of the belt it is advantageous if, seen in the drive direction, the front belt end roll is drivable corresponding to the belt velocity as determined by the driving speed. In that case no additional traction force is developed at the position of the drive wheel which otherwise would again lead to damaging the soil structure.

In order to prevent contaminating of the apparatus by the soil material which is elevated by the belt portion moving upwardly over the back end roll, a wiper for the exterior of the belt may be provided transversely to the belt adjacent to the front end roll.

Since dirt or soil material could reach the interior of the belt from the sides preferably below the upper belt part a V shaped wiper is provided which moves dirt adhering to the belt interior laterally to outside the belt.

This sideways entering of dirt may be reduced by providing at both sides adjacent to the lower belt part a side shoe upwardly inclined from the belt plane.

Moreover, said shoes guide the belt and permit the making of turns by the vehicle provided with the apparatus. Otherwise the belt could laterally slide relative to the rolls.

The invention will be further explained below with reference to the drawing showing an example of an embodiment of the apparatus according to the invention.

Fig. 1 shows a side view of the apparatus mounted below a. so-called tipping wagon constructed as a trailer.

Fig. 2 is a side view of the belt and the rolls.

Fig. 3 shows a plan view of the belt, some portions thereof having been cut out.

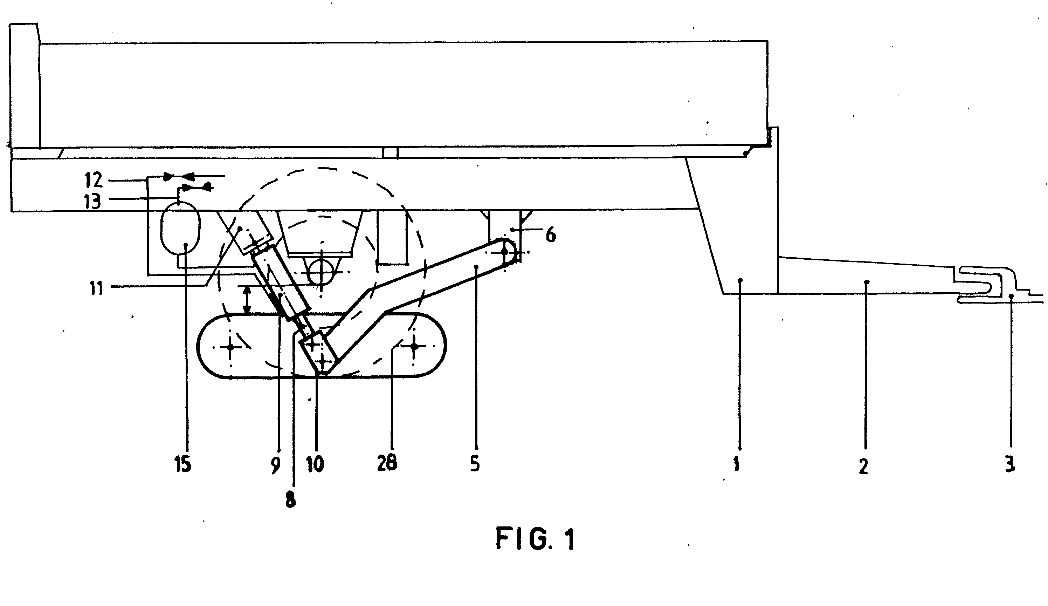

Fig. 1 shows a tipping wagon 1, the pole 2 of which is connected to the towing bracket 3 of a tractor (not shown).

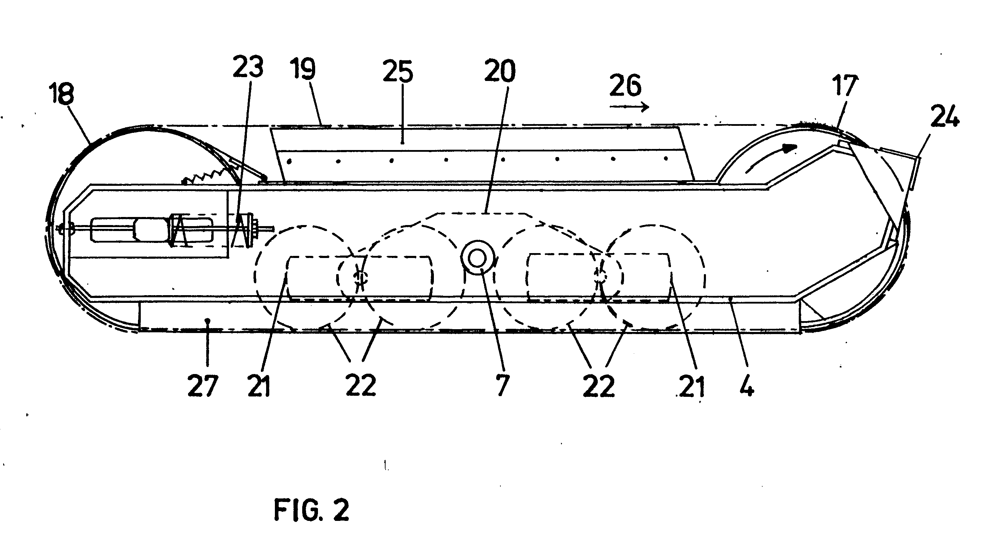

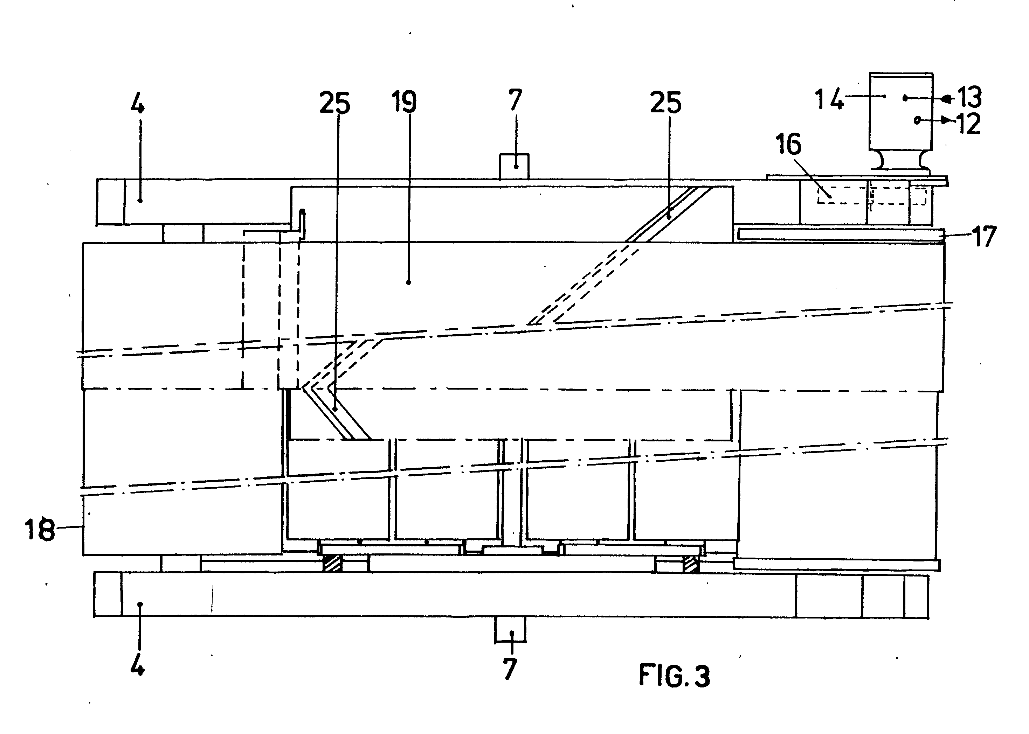

The apparatus according to the invention is mounted below the tipping wagon 1 and comprises a frame, the side beams 4 of which are shown in fig. 3. This frame is articulated to the lower side of the wagon by a pivot arm 5, which is pivotally connected at one end to a bracket 6 secured to the under side of the wagon and with its other end to a shaft 7, which is visible in figures 2 and 3. Likewise the piston rod 8 of a hydraulic cylinder 9 is connected to the shaft 7 by means of a connecting element 10, which is secured to the piston rod 8 and is pivotally connected with the shaft 7. Said piston rod is part of a hydraulic piston cylinder device 9, the other end of the cylinder of which is pivotally connected to a support 11, which is secured to the lower side of the wagon 1. The piston cylinder device is connected in a hydraulic circuit. Conduits 12, 13, shown in fig.1, of a separate hydraulic circuit lead to a hydraulic motor 14 shown in fig. 3. Usual parts of said hydraulic circuits, such as a pump, a reservoir, valves, are not shown. A hydraulic accumulator 15 is connected in the circuit of the piston cyclinder device.

The hydraulic motor 14 drives through a gear transmission a front end roll 7 journalled in the frame 4. A back end roll 18 is mounted in the back end of this frame and is freely rotatable in the frame. A belt 19 of synthetic material extends around both rolls.

A rocker arm 20 is pivotally mounted to the shaft 7 and carries at both ends a yoke 21. At each end of each yoke two intermediate pushing rollers 22 are freely rotatably mounted. In the embodiment shown four intermediate push rollers are shown but their number may be more or less, e.g. two or six rollers.

A tensioning device havng a spring 23 is connected with the back end roll 18 for the belt and permits adjusting the belt tension to the correct value. A wiper 24 for the exterior of the belt 19 is secured to the frame 4 adjacent to the front end roll 17. On top of the frame 4 a V-shaped wiper 25 has been secured, which is also visible in figure 3 and its apex is directed against the direction of movement of the upper part of the belt as indicated with the arrow 26 in fig. 2. Said wiper serves for cleaning the interior of the belt from adhering dirt which is moved by the wiper towards the belt edges and there falls to the ground. Further a fixed lateral show 27 is secured to the frame at both sides of the belt, which shoe serves for lateral guidance of the belt and simultaneously to check the entering of dirt.

It will be clear that a pivot arm 5 and a piston cylinder device 9 are provided at both sides of the wagon, the frame and the belt being present between said units.

For the distribution of the soil pressure of the wagon 1 over a larger surface, the lower run of the belt 19 is brought into engagement with the ground by means of the piston cylinder devices 9 whereafter the piston is hydraulically blocked.

Although driving the belt corresponding to the propulsion speed of the vehicle is not indispensible, it is advantageous because therewith no compensation of the roll resistance of the belt by the tractor vehicle is necessary, so that also thereby no damaging of the ground by locally acting forces occurs.

It will be clear the a different device than a hydraulic device may be provided for pushing the belt with the correct force value against the soil, e.g. a pneumatic or other resilient device.

## Claims

1. Apparatus for increasing the supporting surface on the ground of a vehicle carried by wheels, characterized by a frame (4), articulated to the vehicle (1), said frame carrying two fixed end rolls (17, 18) extending transversely to the longitudinal direction of the vehicle, an endless belt (19) extending around said rolls and is also guided in its lower run by intermediate pushing rollers (22), mounted to the frame (4), which is adapted to be pushed by resilient pushing means (9,15), connected to the vehicle, such that the lower belt run is supported by the ground.

2. Apparatus according to claim 1, characterized in that the resilient pushing means include a piston cylinder device (9) which at one end is pivotally connected to a pivot arm (5) connecting the belt frame (4) to the vehicle (1), said piston cylinder device (9) transmitting part of the vehicle weight to the frame and thereby to the lower run of the belt (19) and being adapted to lift the belt frame (4) free from the ground if it is not used.

3. Apparatus according to claim 2, characterized in that the piston cylinder device (9) comprises a hydraulic piston cylinder device, a hydraulic accumulator (15) being inserted in the hydraulic circuit thereof.

4. Apparatus according to one or more of the preceding claims, characterized in that the pivot arm (5) and the piston cylinder device (9) engage a central shaft (7) of the belt frame (4) and also a rocker arm (20) is pivotally connected to said shaft, said rocker arm carrying the intermediate pushing rollers (22) and having at both its ends one or more intermediate pushing rollers (22) which are pivotable relative to the rocker arm (20).

5. Apparatus according to one or more of the preceding claims, characterized in that the front belt end roll (17), as seen in the vehicle drive direction, is drivable corresponding to the belt velocity as determined by the driving speed.

6. Apparatus according to one or more of the preceding claims, characterized in that a wiper (24) for the exterior of the belt (19) is provided transversely to the belt adjacent to the front end roll (17).

7. Apparatus according to one or more of the preceding claims, characterized in that a V-shaped wiper (25) is provided below the upper run of the belt (19), said wiper moving dirt adhering to the belt exterior laterally to outside the belt.

8. Apparatus according to one or more of the preceding claims, characterized in that at both sides adjacent to the lower belt run a lateral shoe (27) is provided which is inclined upwardly from the belt plane.

12
13

11

6

15  9  10  28  5

8

1  2  3

0 261 279

**FIG. 1**

**FIG. 2**

FIG. 3

0 261 279

**European Patent Office**

## EUROPEAN SEARCH REPORT

Application number

EP 86 20 1637

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-B-1 192 931 (BORDIN)<br>* The whole document *<br><br>--- | 1 | B 62 D 55/02<br>B 62 D 55/07<br>B 62 D 55/088 |
| X | US-A-3 062 327 (DEBUS)<br><br>* Column 1, lines 53-64; column 2, lines 56-60; column 4, lines 15-65; figure 6 *<br><br>--- | 1-3,5-6 | |
| X | EP-A-0 167 077 (BALTENSPERGER)<br><br>* Abstract; figures 1,2,9,10; description page 3; page 5, paragraphs 3,4 *<br><br>--- | 1,2,4,5 | |
| X | DE-A-2 457 013 (LAST)<br>* See especially figures 3,9,10,11; pages 3,4 *<br><br>--- | 1,4,5 | TECHNICAL FIELDS SEARCHED (Int. Cl.4) |
| X | DE-A-2 811 675 (NAUERZ)<br>* See especially figures 1-7; claims 1-7 *<br><br>--- | 1-5 | B 62 D |
| X | FR-A- 794 302 (KEGRESSE)<br>* Abstract; figures 1,3 *<br><br>--- | 1,5 | |
| X | FR-A- 818 466 (KEGRESSE)<br>* Abstract; figure 1 *<br><br>--- -/- | 1,5 | |

The present search report has been drawn up for all claims

| Place of search | Date of completion of the search | Examiner |
|---|---|---|
| THE HAGUE | 25-05-1987 | SCHMAL R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| X | FR-A- 757 538 (BATAILLE)<br>* Figures 1,2; abstract *<br><br>--- | 1 | |
| X | US-A-4 204 583 (TOYOURA et al.)<br>* Figures 1,2,4; column 2, lines 42-68; column 3, lines 40-50; column 5, lines 39-51; column 7, lines 5-10 *<br><br>----- | 1,5 | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 25-05-1987 | SCHMAL R. |